# EUROPÄISCHE PATENTANMELDUNG

(11) **EP 4 556 430 A1**
(43) Veröffentlichungstag der Anmeldung: **21.05.2025**
(21) Anmeldenummer: 24207959.8
(22) Anmeldetag: 22.10.2024
(51) Int. Cl.: B66F 9/12, B66F 9/24, H02G 3/04

(54) **GABELZINKE FÜR EIN FLURFÖRDERZEUG**

(30) Priorität: 16.11.2023 DE 102023131928; 05.12.2023 DE 102023133910
(71) Anmelder: Linde Material Handling GmbH, 63743 Aschaffenburg (DE)
(72) Erfinder: van Gassen, Steven, 9100 Sint-Niklaas (BE); Waijers, Bas, 1851 Grimbergen (BE)
(74) Vertreter: Patentship Patentanwaltgesellschaft

(57) **Zusammenfassung**

Die Erfindung betrifft eine Gabelzinke (2) für ein Flurförderzeug (1), wobei die Gabelzinke (2) ein Gabelblatt (2a) zur Aufnahme einer Last und einen Gabelrücken (2d) aufweist, wobei das Gabelblatt (2a) mit einem freien Ende eine Gabelzinkenspitze (2b) der Gabelzinke (2) bildet und das Gabelblatt (2a) mittels eines Gabelknicks (2c) in den Gabelrücken (2d) übergeht, wobei an der Gabelzinke (2) mindestens eine elektrische Einrichtung (10; 10a) angeordnet ist und mindestens eine Kabelverbindung (11) von dem Gabelrücken (2d) zu der elektrischen Einrichtung (10; 10a) geführt ist. Die Kabelverbindung (11) ist in einer flexiblen Kabelhalterung (12) angeordnet. Die Gabelzinke (2) ist mit mindestens einer Kabelaufnahme (15; 15a) versehen, in die die mit der Kabelhalterung (12) versehene Kabelverbindung (11) einführbar ist, wobei die Kabelaufnahme (15; 15a) von einer in einer Seitenwand (SW) der Gabelzinke (2) angeordneten nutförmigen Ausnehmung (20) gebildet ist, die sich von dem Gabelrücken (2d) zu einem Einbauort der elektrische Einrichtung (10) erstreckt und die mit einer Nutöffnung (21) versehen ist, wobei die mit der Kabelhalterung (12) versehene Kabelverbindung (11) über die Nutöffnung (21) in die nutförmigen Ausnehmung (20; 20a) einführbar ist und mittels der flexiblen Kabelhalterung (12) in der nutförmigen Ausnehmung (20; 20a) elastisch gehalten ist.

## Beschreibung

Die Erfindung betrifft eine Gabelzinke für ein Flurförderzeug, wobei die Gabelzinke ein Gabelblatt zur Aufnahme einer Last und einen Gabelrücken aufweist, wobei das Gabelblatt mit einem freien Ende eine Gabelzinkenspitze der Gabelzinke bildet und das Gabelblatt mittels eines Gabelknicks in den Gabelrücken übergeht, wobei an der Gabelzinke mindestens eine elektrische Einrichtung angeordnet ist und mindestens eine Kabelverbindung von dem Gabelrücken zu der elektrischen Einrichtung geführt ist.

Gabelzinken werden bei Flurförderzeugen eingesetzt, um eine Last aufzunehmen. Bei der Aufnahme der Last wird die Gabelzinke mit dem Gabelblatt mit der Gabelzinkenspitze voraus in eine Aufnahmetasche einer aufzunehmenden Last, beispielsweise einer Palettentasche einer Palette, eingeführt.

Hierbei ist es bekannt, an dem Gabelblatt oder an der Gabelzinkenspitze eine elektrische Einrichtung anzuordnen, beispielsweise einen Sensor oder eine Kamera oder eine Lampe oder einen Laser, beispielsweise einen Laserpointer.

Mit einer derartigen, an einer Gabelzinke angeordneten elektrischen Einrichtung kann bei einem manuell bedienten Flurförderzeug dem Fahrer des Flurförderzeugs ein Assistenzsystem zur Verfügung gestellt werden, das dem Fahrer des Flurförderzeugs die Aufnahme einer Last erleichtert.

Weiterhin werden derartige, mit einer elektrischen Einrichtung versehene Gabelzinken bei einem teilautomatisierten oder vollautomatisierten bzw. autonomen Flurförderzeug, beispielsweise einem sogenannten AGV (automated guided vehicle), eingesetzt, damit das teilautomatisierte oder vollautomatisierte bzw. autonome Flurförderzeug eine Last aufnehmen und/oder absetzen kann. Bei derartigen Flurförderzeugen dient die an der Gabelzinke angeordnete elektrische Einrichtung, beispielsweise ein oder mehrere Sensoren, dazu, das teilautomatisierte oder vollautomatisierte bzw. autonome Flurförderzeug mit einer oder mehreren Gabelzinken richtig vor und unter der Last zu positionieren, so dass die Last ohne Beschädigung aufgenommen werden kann. Eine an der Gabelzinke angeordnete elektrische Einrichtung, beispielsweise ein oder mehrere Sensoren, erleichtern es einem teilautomatisierten oder vollautomatisierten bzw. autonomen Flurförderzeug insbesondere, eine aufzunehmende Last unabhängig von der Navigationsgenauigkeit des Flurförderzeugs sowie unabhängig von der Positioniergenauigkeit einer Last in der Umgebung aufzunehmen.

Eine gattungsgemäße Gabelzinke mit einer als Gabelseitenkamera ausgebildeten elektrischen Einrichtung ist aus der DE 10 2018 100 370 A1 bekannt.

Bei einer gattungsgemäßen Gabelzinke ist eine Kabelverbindung vorgesehen, die von dem Gabelrücken zu der elektrischen Einrichtung geführt ist. Diese entlang des Gabelrückens und des Gabelblattes geführte Kabelverbindung, die ein oder mehrere elektrische Kabel umfassen kann, dient dazu, die elektrische Einrichtung mit dem Flurförderzeug elektrisch zu verbinden, beispielsweise zur Stromversorgung der elektrischen Einrichtung oder zur Übertragung von Signalen der elektronischen Einrichtung, sofern diese beispielsweise als Sensor oder Kamera ausgebildet ist.

Es sind mehrere Systeme zur Kabelführung der Kabelverbindung entlang der Gabelzinke bekannt, bei denen die Kabelverbindung mit der Gabelzinke verklebt oder verschraubt ist.

Teilautomatisierte oder vollautomatisierte bzw. autonome Flurförderzeug werden je nach Einsatz des Flurförderzeugs mit unterschiedlichen elektrischen Einrichtungen, beispielsweise unterschiedlichen Sensoraufbauten, an der Gabelzinke ausgestattet, so dass eine unterschiedliche Anzahl und/oder unterschiedliche Arten von Kabeln als Kabelverbindung an der Gabel verlegt werden muss. Bei Verwendung von verschraubten oder angeklebten Kabeln für die an der Gabelzinke angeordnete elektrische Einrichtung, wobei die Kabelverbindung beim Hersteller der Gabelzinke an der Gabelzinke angeklebt oder angeschraubt wird, führt dies zu hohen Lieferzeiten, Lagerproblemen sowie hohen Herstellkosten, da jede Gabelzinke individuell konfiguriert ist und hergestellt werden muss.

Sofern ein Kabel oder ein Stecker der an der Gabelzinke verlegten Kabelverbindung während des Gebrauchs des Flurförderzeugs beschädigt wird, erfordert die Reparatur einer mit der Gabelzinke verklebten oder verschraubten Kabelverbindung in der Regel einen hohen Zeitaufwand und einen hohen Reparaturaufwand, zu dem ein Servicetechniker erforderlich ist. Zudem kann oftmals nicht sichergestellt werden, dass im Reparaturfall der Kabelverbindung derselbe Qualitätsstandard wie bei der Erstinstallation garantiert ist. Dies führt zu hohen Ausfallzeiten und/oder zu hohen Reparaturkosten des Flurförderzeugs.

Bei derartigen Befestigungslösungen durch Verkleben oder Anschrauben der Kabelverbindung an der Gabelzinke ist somit nachteilig, dass keine Flexibilität hinsichtlich der Ausführung der elektrischen Einrichtung, beispielsweise hinsichtlich des Sensorkonzeptes/-aufbaus, ermöglicht wird. Zudem wird mit derartigen Befestigungslösungen keine einfache Wartung bzw. Auswechslung der Kabelverbindung ermöglicht. Darüber hinaus wird mit derartigen Befestigungslösungen kein wirksamer Kabelschutz erzielt, mit dem die Kabelverbindung wirksam vor mechanischen Beschädigungen geschützt werden kann.

Der vorliegenden Erfindung liegt die Aufgabe zugrunde, eine verbesserte Lösung bereitzustellen, welche wenigstens eines der genannten Probleme adressiert.

Diese Aufgabe wird erfindungsgemäß dadurch gelöst, dass die Kabelverbindung in einer flexiblen Kabelhalterung angeordnet ist und die Gabelzinke mit mindestens einer Kabelaufnahme versehen ist, in die die mit der Kabelhalterung versehene Kabelverbindung einführbar ist, wobei die Kabelaufnahme von einer in einer Seitenwand der Gabelzinke angeordneten nutförmigen Ausnehmung gebildet ist, die sich von dem Gabelrücken zu einem Einbauort der elektrischen Einrichtung erstreckt und die mit einer Nutöffnung versehen ist, wobei die mit der Kabelhalterung versehene Kabelverbindung über die Nutöffnung in die nutförmigen Ausnehmung einführbar ist und mittels der flexiblen Kabelhalterung in der nutförmigen Ausnehmung elastisch gehalten ist.

Erfindungsgemäß ist somit die Kabelverbindung in einer flexiblen Kabelhalterung angeordnet, wodurch die mit der flexiblen Kabelhalterung versehene Kabelverbindung einen flexiblen Kabelbaum bildet.

Die Gabelzinke ist mit mindestens einer Kabelaufnahme versehen, in die die mit der flexiblen Kabelhalterung versehene Kabelverbindung eingeführt werden kann. Die Kabelaufnahme ist insbesondere jeweils von einer in einer Seitenwand der Gabelzinke angeordneten nutförmigen Ausnehmung gebildet, die sich von dem Gabelrücken zu einem entsprechenden Einbauort der elektrischen Einrichtung erstreckt und die mit einer Nutöffnung, die in der Seitenwand der Gabelzinke angeordnet ist, versehen ist. Die Nutöffnung der nutförmigen Ausnehmung bildet somit eine seitliche, in der Seitenwand der Gabelzinke ausgebildete Nutöffnung. Die mit der flexiblen Kabelhalterung versehene Kabelverbindung kann über die Nutöffnung in die nutförmige Ausnehmung der Gabelzinke eingeführt werden und ist mittels der flexiblen Kabelhalterung in der nutförmigen Ausnehmung elastisch gehalten. Insbesondere wird die mit der flexiblen Kabelhalterung versehene Kabelverbindung über die Nutöffnung in die nutförmige Ausnehmung der Gabelzinke hineingedrückt bzw. hineingepresst. Nach dem Hineindrücken der mit der flexiblen Kabelhalterung versehenen Kabelverbindung in die nutförmige Ausnehmung der Gabelzinke ist die mit der flexiblen Kabelhalterung versehene Kabelverbindung in der nutförmigen Ausnehmung elastisch gehalten. Eine elastische Halterung der flexiblen Kabelhalterung in der nutförmigen Ausnehmung wird insbesondere durch die Flexibilität der flexiblen Kabelhalterung erzielt, indem die flexible Kabelhalterung in der nutförmigen Ausnehmung auffedert und beispielsweise mit der nutförmigen Ausnehmung einen kombinierten Kraft- und Formschluss aufweist. Hierdurch wird eine einfache und insbesondere werkzeuglose Befestigung der mit der flexiblen Kabelhalterung versehenen Kabelverbindung an der Gabelzinke ermöglicht, wobei weiterhin eine Selbsthalterung der mit der flexiblen Kabelhalterung versehenen Kabelverbindung in der nutförmigen Ausnehmung der Gabelzinke ohne weitere Befestigungselemente erzielt wird. Die mit der flexiblen Kabelhalterung versehene Kabelverbindung kann insbesondere in einfacher Weise entlang des Gabelknicks verlegt werden. Durch die werkzeuglose Befestigung ist insbesondere eine einfache Erstinstallation und/oder Reparatur und/oder ein einfacher Austausch einer Kabelverbindung an der Gabelzinke möglich. Darüber hinaus bietet die erfindungsgemäße Lösung eine dauerhafte Verlegung der Kabelverbindung entlang der Gabelzinke, die auch die Durchbiegung der Gabelzinke unter Last ausgleicht.

Gemäß einer bevorzugten Ausgestaltungsform der Erfindung ist der Einbauort der mindestens einen elektrischen Einrichtung von dem Gabelrücken und/oder von dem Gabelblatt und/oder von der Gabelzinkenspitze gebildet. Die elektrische Einrichtung kann dadurch angepasst an den Einsatzfall an einem entsprechenden Einbauort an der Gabelzinke angeordnet werden.

Gemäß einer bevorzugten Ausgestaltungsform der Erfindung ist der Einbauort der mindestens einen elektrischen Einrichtung von dem Gabelrücken gebildet und erstreckt sich die in der Seitenwand der Gabelzinke angeordnete nutförmige Ausnehmung entlang des Gabelrückens zu dem Einbauort. Eine mit der flexiblen Kabelhalterung versehene Kabelverbindung kann hierdurch in einfacher Weise innerhalb der nutförmigen Ausnehmung zu einer an dem Gabelrücken angeordneten elektrischen Einrichtung verlegt werden.

Gemäß einer bevorzugten Ausgestaltungsform der Erfindung ist der Einbauort der mindestens einen elektrischen Einrichtung von dem Gabelblatt gebildet und erstreckt sich die in der Seitenwand der Gabelzinke angeordnete nutförmige Ausnehmung von dem Gabelrücken über den Gabelknick und entlang des Gabelblatts zu dem Einbauort. Eine mit der flexiblen Kabelhalterung versehene Kabelverbindung kann hierdurch in einfacher Weise innerhalb der nutförmigen Ausnehmung zu einer an dem Gabelblatt angeordneten elektrischen Einrichtung verlegt werden.

Gemäß einer bevorzugten Ausgestaltungsform der Erfindung ist der Einbauort der mindestens einen elektrischen Einrichtung von der Gabelzinkenspitze gebildet und erstreckt sich die in der Seitenwand der Gabelzinke angeordnete nutförmige Ausnehmung von dem Gabelrücken über den Gabelknick und entlang des Gabelblatts zu dem Einbauort. Eine mit der flexiblen Kabelhalterung versehene Kabelverbindung kann hierdurch in einfacher Weise innerhalb der nutförmigen Ausnehmung zu einer an der Gabelzinkenspitze angeordneten elektrischen Einrichtung verlegt werden.

Gemäß einer bevorzugten Ausgestaltungsform der Erfindung ist die nutförmige Ausnehmung in die Seitenwand der Gabelzinke eingearbeitet, insbesondere durch eine Fräsbearbeitung. Hierdurch kann die nutförmige Ausnehmung in einfacher und kostengünstiger Weise in der Seitenwand der Gabelzinke hergestellt werden.

Gemäß einer bevorzugten Ausgestaltungsform der Erfindung ist die nutförmige Ausnehmung ausgehend von der Oberseite des Gabelrückens in die Seitenwand der Gabelzinke eingearbeitet. Hierdurch ist eine einfache Bearbeitung und Herstellung der nutförmige Ausnehmung in der Gabelzinke möglich. Weiterhin kann hierdurch in einfacher Weise die mit der flexiblen Kabelhalterung versehene Kabelverbindung von der Gabelzinke zu dem Flurförderzeug geführt werden.

Gemäß einer alternativen und ebenfalls bevorzugten Ausgestaltungsform der Erfindung ist die nutförmige Ausnehmung in einem Einlegeteil ausgebildet, wobei das Einlegeteil in einer in der Seitenwand der Gabelzinke angeordneten Aussparung befestigt ist. Mit einem derartigen Einlegeteil, das mit der nutförmigen Ausnehmung versehen ist, und das in einer entsprechenden in der Seitenwand der Gabelzinke ausgebildeten Aussparung der Gabelzinke befestigt ist, kann ebenfalls in einfacher Weise die Gabelzinke mit einer nutförmigen Ausnehmung versehen werden.

Gemäß einer bevorzugten Ausgestaltungsform der Erfindung weist die nutförmige Ausnehmung einen kreisförmigen Aufnahmequerschnitt auf und ist die Nutöffnung von einem seitlich angeordneten Öffnungsquerschnitt gebildet, wobei die Öffnungsweite des Öffnungsquerschnitts kleiner als der Durchmesser des Aufnahmequerschnitts ist. Mit einem derart ausgebildeten Aufnahmequerschnitt wird in einfacher Weise erzielt, dass die mit der flexiblen Kabelhalterung versehene Kabelverbindung über den Öffnungsquerschnitt in den kreisförmigen Aufnahmequerschnitt hineingedrückt werden kann, und der Öffnungsquerschnitt, dessen Öffnungsweite kleiner als der Durchmesser des Aufnahmequerschnitts ist, einen Hinterschnitt bildet, mit dem die mit der flexiblen Kabelhalterung versehene Kabelverbindung in dem kreisförmigen Aufnahmequerschnitt mittels eines Formschlusses gehalten ist.

Gemäß einer bevorzugten Ausgestaltungsform der Erfindung ist die flexible Kabelhalterung als flexibles Kabelschutzrohr ausgebildet. Ein oder mehrere Kabel der Kabelverbindung können in ein derartiges flexibles Kabelschutzrohr in einfacher Weise eingelegt werden und sind durch das flexibles Kabelschutzrohr wirksam vor mechanischen Beschädigungen geschützt. Die Verwendung eines flexiblen Kabelschutzrohres ermöglicht es weiterhin in einfacher Weise, bei unterschiedlichen Ausführungen der elektrischen Einrichtung an der Gabelzinke eine unterschiedliche Anzahl und/oder unterschiedliche Arten von Kabeln als Kabelverbindung in das flexibles Kabelschutzrohr einzulegen.

Gemäß einer bevorzugten Ausgestaltungsform der Erfindung ist das flexible Kabelschutzrohr als Wellrohr, insbesondere geschlitztes Wellrohr, oder als Spiralschlauch ausgebildet. In ein flexibles Wellrohr oder einen flexiblen Spiralschlauch kann die Kabelverbindung in einfacher Weise eingelegt werden und anschließend das mit der Kabelverbindung versehene flexibles Wellrohr bzw. der mit der Kabelverbindung versehene flexible Spiralschlauch in die entlang des Gabelblattes über den Gabelknick zu dem Gabelrücken erstreckende nutförmige Ausnehmung eingelegt werden.

Gemäß einer bevorzugten und alternativen Ausgestaltungsform der Erfindung kann die flexible Kabelhalterung von mindestens einem flexiblen Kabelhaltering und/oder mindestens einem flexiblen Kabelhalteclips gebildet sein. Mit einem oder mehreren Kabelhalteringen, die geschlossen oder geschlitzt ausgeführt sein können, bzw. mit einem oder mehreren Kabelhalteclips, wobei die Kabelhalteringe bzw. Kabelhalteclips über die Länge der Kabelverbindung verteilt sind und die Kabelverbindung innerhalb der Kabelhalteringe bzw. Kabelhalteclips angeordnet ist und somit die Kabelverbindung innerhalb der Kabelhalteringe bzw. Kabelhalteclips eingelegt ist, kann die Kabelverbindung in einfacher Weise an der Gabelzinke vor mechanischen Beschädigungen geschützt verlegt und gehaltert werden. Die Kabelverbindung kann in Kabelhalteringe bzw. Kabelhalteclips in einfacher Weise eingelegt werden und anschließend die mit den Kabelhalteringen bzw. Kabelhalteclips versehene Kabelverbindung in die entlang des Gabelblattes über den Gabelknick zu dem Gabelrücken erstreckende nutförmige Ausnehmung eingelegt werden.

Gemäß einer bevorzugten Ausgestaltungsform der Erfindung ist die elektrische Einrichtung als Sensor, beispielsweise Abstandssensor, oder als Kamera oder als Lampe oder als Laser oder als mindestens ein Ultraschallsensor ausgebildet. Mit einem beispielsweise als Abstandssensor ausgebildeten Sensor kann der Abstand der Gabelzinke zu einer aufzunehmenden Palette als Last ermittelt werden. Mit einer Kamera, beispielsweise einer Stereokamera oder einer Time-of-Flight-Kamera, kann ein Bild einer aufzunehmenden Palette als Last erfasst werden, das bei einem manuell bedienten Flurförderzeug einem Fahrer an einem Display angezeigt werden kann oder bei einem teilautomatisierten oder vollautomatisierten bzw. autonomen Flurförderzeug zur Ermittlung der Aufnahmetaschen einer aufzunehmenden Last, insbesondere der Lage und der Orientierung der Aufnahmetaschen, verwendet werden kann. Mit einer Lampe kann bei einem Flurförderzeug eine Ausleuchtung einer aufzunehmenden Last erzielt werden. Mit einem Laser, beispielsweise einem Laserpointer, kann eine Markierung auf eine aufzunehmende Last erzeugt werden, die einem Fahrer eines manuell bedienten Flurförderzeugs als optisches Hilfsmittel für die Lastaufnahme dienen kann. Mit einem Ultraschallsensor oder mehreren Ultraschallsensoren bei einem teilautomatisierten oder vollautomatisierten bzw. autonomen Flurförderzeug eine korrekte Aufnahme einer mit der Gabelzinke aufgenommene Palette überwacht werden und während des Transport der Palette ein Verrutschen der Palette auf der Gabelzinke erkannt werden.

Gemäß einer bevorzugten Ausgestaltungsform der Erfindung ist die Gabelzinke an der rechten Seitenwand oder an der linken Seitenwand mit einer nutförmigen Ausnehmung versehen.

Gemäß einer alternativen und ebenfalls bevorzugten Ausgestaltungsform der Erfindung ist die Gabelzinke an der rechten Seitenwand und an der linken Seitenwand mit jeweils einer nutförmigen Ausnehmung versehen. Hierdurch können in einfacher Weise mehrere elektrische Einrichtungen an entsprechenden Einbauorten an der Gabelzinke angeordnet werden. Sofern in jeder nutförmigen Ausnehmung jeweils ein mit der flexiblen Kabelhalterung versehene Kabelverbindung verlegt ist, können somit in einfacher Weise mehrere mit einer flexiblen Kabelhalterung versehene Kabelverbindungen entlang der Gabelzinke verlegt werden. Eine derartige Ausführung der Gabelzinke ist insbesondere bei teilautomatisierten oder vollautomatisierten bzw. autonomen Flurförderzeug vorteilhaft, um bei derartigen Flurförderzeuge an der Gabelzinke an mehreren Einbauorten mehrere elektrische Einrichtungen anordnen zu können, beispielsweise an der Gabelzinkenspitze und an dem Gabelblatt.

Die Erfindung betrifft weiterhin ein Flurförderzeug mit einer oben beschriebenen Gabelzinke.

Die Erfindung weist eine Reihe von Vorteilen auf.

Die Erfindung ermöglicht eine einfache Installation und einen einfachen Austausch einer Kabelverbindung für verschiedene Sensoraufbauten an einer Gabelzinke. Die erfindungsgemäße Kabelführung ermöglicht weiterhin eine dauerhafte Befestigung der Kabelverbindung an der Gabelzinke auch bei Durchbiegungen und Verformungen der Gabelzinke unter Last. Die selbsthaltende Eigenschaft der flexiblen Kabelhalterung in der nutförmigen Ausnehmung ermöglicht ein Durchbiegen der Gabelzinke unter Last, ohne die Kabelführung zu beeinträchtigen oder zu beschädigen. Die Abmessung der flexiblen Kabelhalterung und die selbsthaltende Eigenschaft der flexiblen Kabelhalterung in der nutförmigen Ausnehmung garantieren, dass die Kabelverbindung nicht über die Außenabmessungen der Gabelzinke hinausragt, wodurch ein wirksamer Schutz der Kabelverbindung vor mechanischen Beschädigungen im Betrieb des Flurförderzeugs erzielt wird. Die Erfindung ermöglicht weiterhin in einfacher Weise eine flexible und vollständige Integration der Kabelverbindung in die Gabelzinke.

Mit der selbsthaltenden Eigenschaft der flexiblen Kabelhalterung in der nutförmigen Ausnehmung ist insbesondere für die Halterung der Kabelverbindung an der Gabelzinke keine Verschraubung und/oder keine Verklebung und/oder keine Befestigung mittels Schellen oder Kabelbindern erforderlich.

Zudem kann das Einlegen der Kabelverbindung in die flexible Kabelhalterung als Vormontageschritt ausgeführt werden, so dass eine schnelle Montage des Flurförderzeugs erzielt werden kann und/oder ein schneller und einfacher Austausch einer defekten Kabelverbindung ermöglicht wird.

Mit der Erfindung wird insbesondere ermöglicht, eine Gabelzinke in einfacher Weise mit unterschiedlichen elektrischen Einrichtungen zu versehen. Die Kabelverbindung kann weiterhin von einem Hersteller des Flurförderzeugs an der Gabelzinke angebracht werden. Hierdurch werden die Beschaffung und die Lagerhaltung von Gabelzinken vereinfacht und es können Flurförderzeuge mit unterschiedlichen elektrischen Einrichtungen an der Gabelzinke bedarfsgerecht mit kurzen Lieferzeiten hergestellt werden. Weiterhin ist ein einfacher Austausch der Kabelverbindung im Falle einer Reparatur möglich, wozu keine speziell ausgebildeter Servicetechniker erforderlich ist.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit einer erfindungsgemäßen Gabelzinke in einer perspektivischen Darstellung,
- Figur 2: eine Kabelverbindung an der Gabelzinke der Figur 1 in einer vergrößerten Darstellung,
- Figur 3: einen Querschnitt einer ersten Ausführungsform einer Gabelzinke der Figur 1,
- Figur 4: einen Ausschnitt mit einer Seitenansicht der Gabelzinke der Figur 3 in einer vergrößerten Darstellung,
- Figur 5: die elektrische Einrichtung der Figur 1 in einer vergrößerten Darstellung,
- Figur 6: die Gabelzinke der Figuren 3 und 4 in einer perspektivischen Darstellung,
- Figur 7: eine zweite Ausführungsform einer Gabelzinke der Figur 1 in einer ersten perspektivischen Seitenansicht,
- Figur 8: die Gabelzinke der Figur 7 in einer zweiten perspektivischen Seitenansicht,
- Figur 9: eine Seitenansicht der Gabelzinke der Figuren 7 und 8,
- Figur 10: einen Schnitt entlang der Linie C-C der Figur 9 und
- Figur 11: einen Schnitt entlang der Linie B-B der Figur 9.

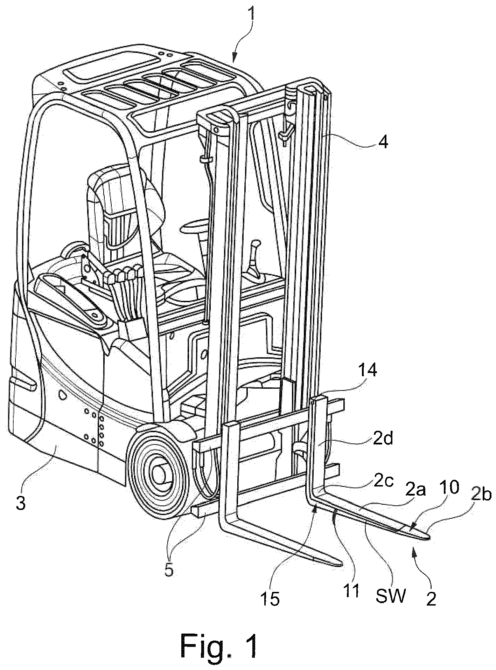

In der Figur 1 ist ein Flurförderzeug 1 mit einer erfindungsgemäßen Gabelzinke 2 dargestellt. Es versteht sich, dass das Flurförderzeug 1 auch mit mehreren erfindungsgemäßen Gabelzinken 2, beispielsweise zwei erfindungsgemäßen Gabelzinken, ausgestattet sein kann.

Das Flurförderzeug 1 weist einen Fahrzeugkörper 3 auf, an dem ein Hubgerüst 4 angebracht, an dem ein Gabelträger 5 mittels eines Hubantriebs anhebbar und absenkbar angeordnet ist.

An dem Gabelträger 5 ist eine Lastgabel angeordnet, die im dargestellten Ausführungsbeispiel zwei Gabelzinken 2 umfasst.

Die Gabelzinke 2 weist ein Gabelblatt 2a zur Aufnahme einer Last auf. Das Gabelblatt 2a bildet mit einem freien, vorderen Ende eine Gabelzinkenspitze 2b der Gabelzinke 2. Der Blattschnitt 2a geht unter Ausbildung eines Gabelknicks 2c in einen Gabelrücken 2d über. An dem Gabelrücken 2d sind als Haken ausgebildete Befestigungsmittel vorgesehen, mit denen die Gabelzinke 2 an dem Gabelträger 5 befestigt ist. Der Gabelrücken 2d ist gegenüber dem Gabelblatt 5a abgewinkelt, beispielsweise um ca. 90 Grad - einen fachüblichen Toleranzbereich von wenigen Grad einschließend - abgewinkelt.

Bei der Aufnahme einer Last wird die Gabelzinke 2 mit der Gabelzinkenspitze 2b voraus in eine Aufnahmetasche einer aufzunehmenden Last, beispielsweise eine Palettentasche einer Palette, eingeführt.

Im dargestellten Ausführungsbeispiel ist in bzw. an der Gabelzinkenspitze 2b als Einbauort eine elektrische Einrichtung 10 angeordnet und die Gabelzinke 2 ist mit einer Kabelverbindung 11 versehen, die von der elektrische Einrichtung 10 zu dem Gabelrücken 2d geführt ist. An dem im Bereich des Gabelrückens 2d angeordneten Ende der Kabelverbindung 11 ist beispielsweise eine Steckerverbindung 14 ausgebildet, mit der die Kabelverbindung 11 an eine Verkabelung angeschlossen ist, die von dem Fahrzeugkörper 3 des Flurförderzeugs 1 durch das Hubgerüst 4 an den Gabelträger 5 geführt ist.

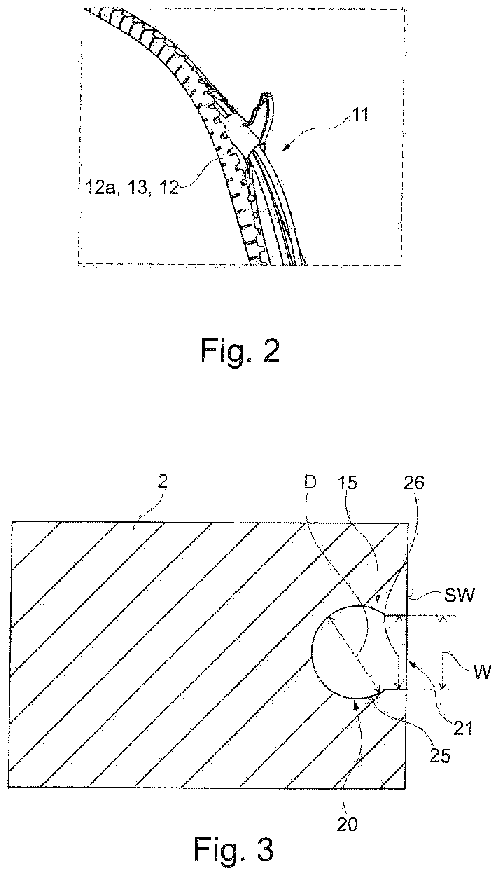

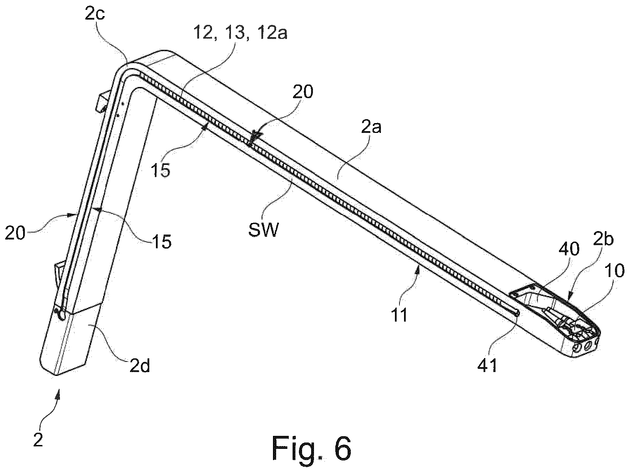

Der Aufbau einer ersten Ausführungsform der Gabelzinke 2 mit der elektrischen Einrichtung 10 und der Kabelverbindung 11 ist anhand der Figuren 2 bis 6 näher erläutert.

Wie in Verbindung mit den Figuren 2 bis 6 näher ersichtlich ist, ist die Kabelverbindung 11, die ein oder mehrere elektrische Verbindungskabel umfassen kann, in einer flexiblen Kabelhalterung 12 angeordnet.

Im dargestellten Ausführungsbeispiel ist die flexiblen Kabelhalterung 12 als flexibles Kabelschutzrohr 12a oder als Spiralschlauch 13 ausgebildet. Die flexible Kabelhalterung 12 besteht aus einem elastischen Kunststoffmaterial.

Die Gabelzinke 2 ist mit einer Kabelaufnahme 15 versehen, in die die mit der flexiblen Kabelhalterung 12 versehene Kabelverbindung 11 einführbar ist. Die Kabelaufnahme 15 ist von einer in einer Seitenwand SW der Gabelzinke 2 angeordneten nutförmigen Ausnehmung 20 gebildet, die sich entlang des Gabelblattes 2a über den Gabelknick 2c zu dem Gabelrücken 2d erstreckt. Die nutförmige Ausnehmung 20 kann in einer - in Blickrichtung eines Fahrers des Flurförderzeugs 1 in Richtung der Gabelzinkenspitze 2b - rechten Seitenwand oder linken Seitenwand der Gabelzinke 2 angeordnet sein. Die nutförmige Ausnehmung 20 ist mit einer in der Seitenwand SW ausgebildeten Nutöffnung 21 versehen. Die mit der flexiblen Kabelhalterung 12 versehene Kabelverbindung 11 kann über die Nutöffnung 21 in die nutförmigen Ausnehmung 20 eingeführt und eingelegt werden, beispielsweise hineingedrückt bzw. hineingepresst werden, und ist mittels der elastischen Kabelhalterung 12 in der nutförmigen Ausnehmung 20 elastisch gehalten.

Im dargestellten Ausführungsbeispiel ist die nutförmige Ausnehmung 20 - wie aus der Figur 3 ersichtlich ist - in die Seitenwand SW der Gabelzinke 2 eingearbeitet, beispielsweise durch eine Fräsbearbeitung.

Die nutförmige Ausnehmung 20 weist einen kreisförmigen Aufnahmequerschnitt 25 auf. Die Nutöffnung 21 ist von einem seitlich an dem kreisförmigen Aufnahmequerschnitt 25 angeordneten Öffnungsquerschnitt 26 gebildet, der in der Seitenwand SW ausgebildet ist. Der kreisförmigen Aufnahmequerschnitt 25 weist einen Durchmesser D auf. Die Öffnungsweite W des Öffnungsquerschnitts 26 ist kleiner als der Durchmesser D des Aufnahmequerschnitts 25.

Der Durchmesser der flexiblen Kabelhalterung 12, im dargestellten Ausführungsbeispiel der Durchmesser des als Spiralschlauch 13 ausgebildeten flexiblen Kabelschutzrohres 12a, ist derart ausgebildet, dass die mit der Kabelverbindung 11 versehene flexible Kabelhalterung 12 in seitlicher Richtung über den Öffnungsquerschnitt 26 in den kreisförmigen Aufnahmequerschnitt 25 der nutförmige Ausnehmung 20 hineingepresst bzw. hineingedrückt werden kann und die flexible Kabelhalterung 12 im eingebauten Zustand durch seine Ausfederung an der Wandung des Aufnahmequerschnitt 25 anliegt, so dass die flexible Kabelhalterung 12, im dargestellten Ausführungsbeispiel das flexible Kabelschutzrohr 12a, in der nutförmige Ausnehmung 20 elastisch gehalten ist. In Verbindung mit dem von der Öffnungsweite W des Öffnungsquerschnitts 26 gebildeten Hinterschnitt wird somit die flexible Kabelhalterung 12 in der Ausnehmung 20 mittels eines kombinieren Kraft- und Formschlusses gehalten. Hierdurch wird eine Selbsthalterung der mit der Kabelverbindung 11 versehenen flexiblen Kabelhalterung 12 in der Ausnehmung 20 erzielt und es werden keine zusätzlichen Befestigungsmittel benötigt, die die flexible Kabelhalterung 12, im dargestellten Ausführungsbeispiel das flexibel Kabelschutzrohr 12, in der Ausnehmung 20 in Position halten. Beim Einführen in die nutförmige Ausnehmung 20 wird die flexible Kabelhalterung 12, im dargestellten Ausführungsbeispiel das flexible Kabelschutzrohr 12a, kurz zusammengedrückt und schließlich in seiner vorgesehenen Endposition wieder entspannt.

Durch die Ausbildung der nutförmigen Ausnehmung 20 innerhalb des Querschnittprofils der Gabelzinke 2 ist die mit der Kabelverbindung 11 versehene und in der Ausnehmung 20 montierte flexible Kabelhalterung 12, im dargestellten Ausführungsbeispiel das mit der Kabelverbindung 11 versehene und in der Ausnehmung 20 montierte flexible Kabelschutzrohr 12a, vollständig innerhalb des Querschnittprofils der Gabelzinke 2 angeordnet und im Betrieb des Flurförderzeugs 1 wirksam gegen mechanische Beschädigungen geschützt.

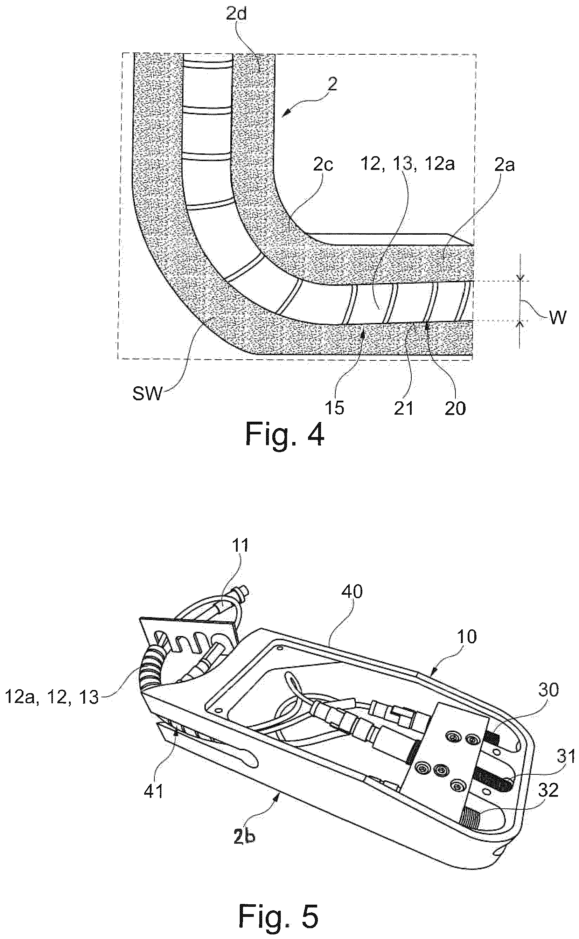

In der Figur 5 ist die in der Gabelzinkenspitze 2b angeordnete elektrische Einrichtung 10 näher dargestellt. Die elektrische Einrichtung 10 umfasst bevorzugt einen Sensor 30, beispielsweise einen Abstandssensor, eine Kamera 31 und eine Lampe 32. In der Figur 5 ist weiterhin die mehrere Verbindungskabel umfassende Kabelverbindung 11 und das im dargestellten Ausführungsbeispiel als Spiralschlauch 13 ausgebildete flexible Kabelschutzrohr 12a als flexible Kabelhalterung 12 näher dargestellt, innerhalb der die Kabelverbindung 11 angeordnet ist. An einem Gehäuse 40 der elektrische Einrichtung 10, das an der Gabelzinkenspitze 2b angeordnet werden kann, ist ein Kabelauslass 41 für die flexible Kabelhalterung 12 ausgebildet, der im montierten Zustand der elektrischen Einrichtung 10 in der Gabelzinkenspitze 2b mit der nutförmigen Ausnehmung 20 fluchtend angeordnet ist, so dass die mit der Kabelverbindung 11 versehene flexible Kabelhalterung 12 von der elektrischen Einrichtung 10 in die nutförmige Ausnehmung 20 der Gabelzinke 2 geführt werden kann ohne aus dem Querschnitt der Gabelzinke 2 herauszuragen.

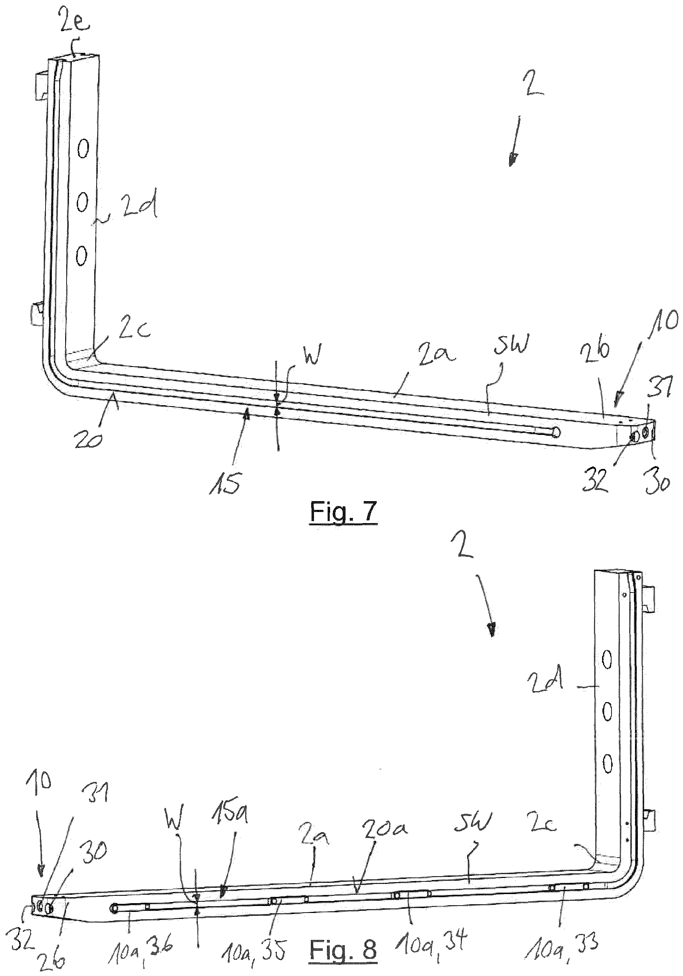

In den Figuren 7 bis 11 ist eine zweite Ausführungsform der Gabelzinke 2 näher dargestellt.

Bei der Gabelzinke 2 der Figuren 7 bis 11 ist analog zu der Gabelzinke 2 der Figuren 3, 4 und 6 in bzw. an der Gabelzinkenspitze 2b als Einbauort eine elektrische Einrichtung 10, beispielsweise eine elektrische Einrichtung 10 mit den Sensoren 30, 31, 32 gemäß der Figur 5, angeordnet und ist die Gabelzinke 2 mit einer nicht näher dargestellten Kabelverbindung 11 gemäß der Figur 2 versehen, die von der elektrische Einrichtung 10 zu dem Gabelrücken 2d geführt ist.

Die Gabelzinke 2 der Figuren 7 bis 11 ist analog zur Gabelzinke 2 der Figuren 2 bis 6 mit einer ersten Kabelaufnahme 15 versehen, in die eine erste mit der flexiblen Kabelhalterung 12 versehene Kabelverbindung 11 einführbar ist. Die erste Kabelaufnahme 15 ist von einer in einer Seitenwand SW der Gabelzinke 2 angeordneten ersten nutförmigen Ausnehmung 20 gebildet, die sich entlang des Gabelblattes 2a über den Gabelknick 2c zu dem Gabelrücken 2d erstreckt. Die erste nutförmige Ausnehmung 20 ist in einer - in Blickrichtung eines Fahrers des Flurförderzeugs 1 in Richtung der Gabelzinkenspitze 2b - rechten Seitenwand der Gabelzinke 2 angeordnet. In der ersten Kabelaufnahme 15 ist die zu der in bzw. an der Gabelzinkenspitze 2b angeordneten elektrischen Einrichtung 10 geführte, mit der flexiblen Kabelhalterung 12 versehene Kabelverbindung 11 verlegt.

Zusätzlich ist die Gabelzinke 2 der Figuren 2 bis 7 in dem Gabelblatt 2a als Einbauort mit einer weiteren elektrischen Einrichtung 10a versehen, die im dargestellten Ausführungsbeispiel mehrere entlang des Gabelblatts 2a verteilt angeordnete Sensoren 33, 34, 35, 36 aufweist, beispielsweise Ultraschallsensoren, die eine in Querrichtung der Gabelzinke 2 liegende Erfassungsrichtung aufweisen. Die Gabelzinke 2 der Figuren 7 bis 11 ist mit einer zweiten Kabelaufnahme 15a versehen, in die eine zweite mit einer flexiblen Kabelhalterung 12 versehene Kabelverbindung 11 gemäß der Figur 2 einführbar ist. Die zweite Kabelaufnahme 15a ist von einer in einer Seitenwand SW der Gabelzinke 2 angeordneten zweiten nutförmigen Ausnehmung 20a gebildet, die sich entlang des Gabelblattes 2a über den Gabelknick 2c zu dem Gabelrücken 2d erstreckt. Die zweite nutförmige Ausnehmung 20a ist in einer - in Blickrichtung eines Fahrers des Flurförderzeugs 1 in Richtung der Gabelzinkenspitze 2b - linken Seitenwand der Gabelzinke 2 angeordnet.

In den Figuren 7 bis 11 weisen die in der rechten Seitenwand SW der Gabelzinke 2 ausgebildete erste nutförmigen Ausnehmung 20 und die in der linken Seitenwand der Gabelzinke 2 ausgebildete zweite nutförmigen Ausnehmung 20a im Wesentlichen den in Verbindung mit der Figur 3 verdeutlichten Aufbau auf, wobei die nutförmigen Ausnehmungen 20, 20a jeweils einen kreisförmigen Aufnahmequerschnitt 25 aufweisen und die Nutöffnung 21 jeweils von einem seitlich an dem kreisförmigen Aufnahmequerschnitt 25 angeordneten Öffnungsquerschnitt 26 gebildet ist, der in der entsprechenden Seitenwand SW ausgebildet ist. Der kreisförmige Aufnahmequerschnitt 25 der nutförmigen Ausnehmungen 20, 20a weist jeweils einen Durchmesser D auf und die Öffnungsweite W des Öffnungsquerschnitts 26 ist kleiner als der Durchmesser D des Aufnahmequerschnitts 25.

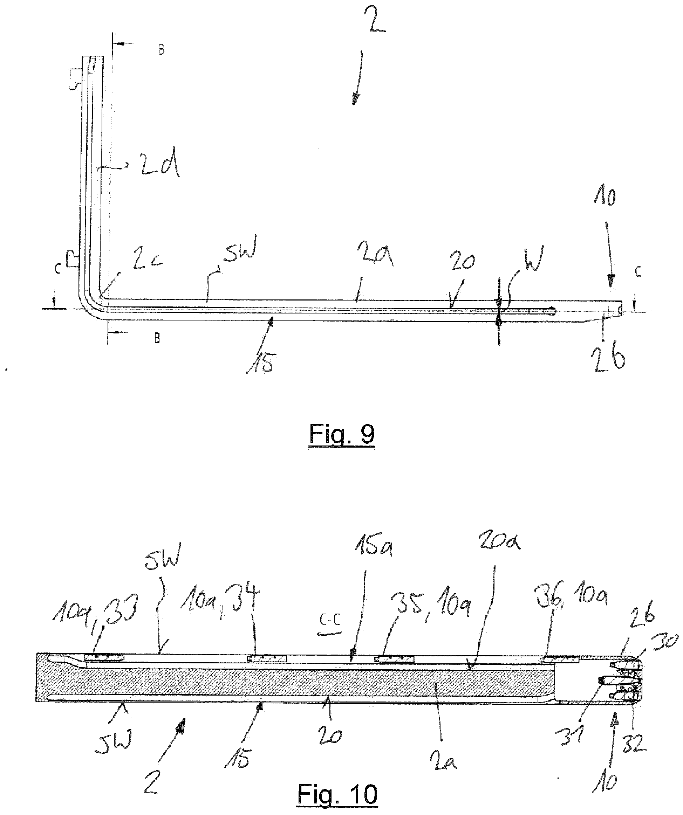

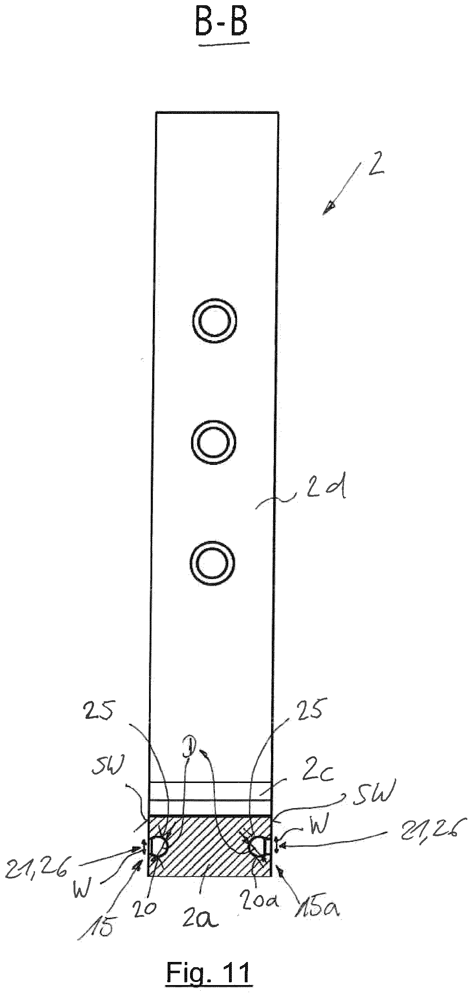

In dem Ausführungsbeispiel der Figuren 7 bis 11 sind die Sensoren 33, 34, 35, 36 der elektrischen Einrichtung bevorzugt innerhalb der zweiten nutförmigen Ausnehmung 20a angeordnet. Die zweite Ausnehmung 20a ist hierzu bevorzugt - wie in den Figuren 10 und 11 ersichtlich ist - im Bereich des Gabelblattes 2a tiefer in der Gabelzinke 2 angeordnet.

In der zweiten Kabelaufnahme 15a ist die zu der im Gabelblatt 2a als Einbauort angeordneten elektrischen Einrichtung 10a geführte, mit der flexiblen Kabelhalterung 12 versehene zweite Kabelverbindung 11 verlegt.

Die in der ersten Kabelaufnahme 15 verlegte, mit der flexiblen Kabelhalterung 12 versehene Kabelverbindung 11 und die in der zweiten Kabelaufnahme 15a verlegte, mit der flexiblen Kabelhalterung 12 versehene Kabelverbindung 11 sind in den Figuren 7 bis 11 nicht näher dargestellt.

In der Figur 7 ist weiter dargestellt, dass die nutförmigen Ausnehmung 20 und/oder die nutförmigen Ausnehmung 20a von der Oberseite 2e des Gabelrückens 2d ausgehend in die entsprechende Seitenwand SW der Gabelzinke 2 eingearbeitet sind. Die mit der flexiblen Kabelhalterung 12 versehene Kabelverbindung 11 kann somit in vorteilhafter Weise nach vertikal oben aus der entsprechenden nutförmigen Ausnehmung 20, 20a herausgeführt werden.

Zur Montage der Kabelverbindung 11 in der Gabelzinke 2 werden in einem ersten Schritt die Verbindungskabel der Kabelverbindung 11 in die flexible Kabelhalterung 12, im dargestellten Ausführungsbeispiel in das flexible Kabelschutzrohr 12a, eingelegt.

Anschließend wird in einem zweiten Schritt die mit der Kabelverbindung 11 versehene flexible Kabelhalterung 12, im dargestellten Ausführungsbeispiel das mit der Kabelverbindung 11 versehene flexible Kabelschutzrohr 12a, in die nutförmigen Ausnehmung 20 bzw. 20a der Gabelzinke 2 montiert, die sich von der Gabelzinkenspitze 2b über das Gabelblatt 2a, den Gabelknick 2c zu dem Gabelrücken 2d erstreckt. Durch das Hineinpressen bzw. Hineindrücken der mit der Kabelverbindung 11 versehenen flexiblen Kabelhalterung 12 in die nutförmige Ausnehmung 20 bzw. 20a der Gabelzinke 2 wird eine werkzeuglose und einfache sowie schnelle Montage der mit der Kabelverbindung 11 versehenen flexiblen Kabelhalterung 12 in der nutförmigen Ausnehmung 20 bzw. 20a erzielt und die mit der Kabelverbindung 11 versehene flexible Kabelhalterung 12, im dargestellten Ausführungsbeispiel das mit der Kabelverbindung 11 versehene flexible Kabelschutzrohr 12a, sicher innerhalb des Querschnitts der Gabelzinke 2 gehalten. Die mit der Kabelverbindung 11 versehene flexible Kabelhalterung 12, im dargestellten Ausführungsbeispiel das mit der Kabelverbindung 11 versehene flexible Kabelschutzrohr 12a, kann hierbei insbesondere - wie aus der Figur 4 ersichtlich ist - in einfacher Weise in die entlang des Gabelknicks 2c gebogene Aufnahmenut 20 montiert werden.

Die erfindungsgemäße Kabelführung der Kabelverbindung 11, bei der die mit der Kabelverbindung 11 versehene flexible Kabelhalterung 12 innerhalb der nutförmigen Ausnehmung 20 bzw. 20a der Gabelzinke 2 ohne zusätzliche Befestigungselemente gehalten ist, ermöglicht insbesondere eine einfache und sichere Halterung der Kabelverbindung 11 an der Gabelzinke 2, bei der die Durchbiegung der Gabelzinke 2 unter Last zu keiner Beeinträchtigung oder Beschädigung der Kabelverbindung 11 führt.

Die erfindungsgemäße Kabelführung der Kabelverbindung 11, bei der die mit der Kabelverbindung 11 versehene flexible Kabelhalterung 12 innerhalb der nutförmigen Ausnehmung 20 bzw. 20a der Gabelzinke 2 gehalten ist, ermöglicht es ebenfalls, an einer Gabelzinke 2 ohne Veränderungen an der nutförmigen Ausnehmung 20 bzw. 20a modular verschiedene elektrische Einrichtungen 10 mit unterschiedlicher Anzahl von Sensoren und/oder unterschiedlichen Sensoraufbauten anzubauen, wodurch Gabelzinken 2 mit verschiedenen elektrischen Einrichtungen 10 an der Gabelzinkenspitze 2b in schneller Weise und bei geringen Herstellkosten hergestellt werden können.

Die Erfindung ist nicht auf die Ausführung der flexiblen Kabelhalterung 12 als flexible Kabelschutzrohr 12a beschränkt. Alternativ kann die flexiblen Kabelhalterung 12 von mehreren flexiblen Kabelhalteringen, die geschlossenen oder geschlitzt ausgeführt sein können, bzw. von mehreren flexiblen Kabelhalteclips, gebildet sein, innerhalb denen die Kabelverbindung 11 angeordnet ist, wobei die Kabelhalteringe bzw. Kabelhalteclips über die Länge der Kabelverbindung 11 verteilt angeordnet sind.

## Patentansprüche

1. Gabelzinke (2) für ein Flurförderzeug (1), wobei die Gabelzinke (2) ein Gabelblatt (2a) zur Aufnahme einer Last und einen Gabelrücken (2d) aufweist, wobei das Gabelblatt (2a) mit einem freien Ende eine Gabelzinkenspitze (2b) der Gabelzinke (2) bildet und das Gabelblatt (2a) mittels eines Gabelknicks (2c) in den Gabelrücken (2d) übergeht, wobei an der Gabelzinke (2) mindestens eine elektrische Einrichtung (10; 10a) angeordnet ist und mindestens eine Kabelverbindung (11) von dem Gabelrücken (2d) zu der elektrischen Einrichtung (10; 10a) geführt ist, **dadurch gekennzeichnet, dass** die Kabelverbindung (11) in einer flexiblen Kabelhalterung (12) angeordnet ist und die Gabelzinke (2) mit mindestens einer Kabelaufnahme (15; 15a) versehen ist, in die die mit der Kabelhalterung (12) versehene Kabelverbindung (11) einführbar ist, wobei die Kabelaufnahme (15; 15a) von einer in einer Seitenwand (SW) der Gabelzinke (2) angeordneten nutförmigen Ausnehmung (20; 20a) gebildet ist, die sich von dem Gabelrücken (2d) zu einem Einbauort der elektrische Einrichtung (10) erstreckt und die mit einer Nutöffnung (21) versehen ist, wobei die mit der Kabelhalterung (12) versehene Kabelverbindung (11) über die Nutöffnung (21) in die nutförmigen Ausnehmung (20; 20a) einführbar ist und mittels der flexiblen Kabelhalterung (12) in der nutförmigen Ausnehmung (20; 20a) elastisch gehalten ist.

2. Gabelzinke nach Anspruch 1, **dadurch gekennzeichnet, dass** der Einbauort der mindestens einen elektrischen Einrichtung (10; 10a) von dem Gabelrücken (2d) und/oder von dem Gabelblatt (2a) und/oder von der Gabelzinkenspitze (2b) gebildet ist.

3. Gabelzinke nach Anspruch 2, **dadurch gekennzeichnet, dass** der Einbauort der mindestens einen elektrischen Einrichtung (10; 10a) von dem Gabelrücken (2d) gebildet ist und sich die in der Seitenwand (SW) der Gabelzinke (2) angeordnete nutförmige Ausnehmung (20; 20a) entlang des Gabelrückens (2d) zu dem Einbauort erstreckt.

4. Gabelzinke nach Anspruch 2, **dadurch gekennzeichnet, dass** der Einbauort der mindestens einen elektrischen Einrichtung (10; 10a) von dem Gabelblatt (2a) gebildet ist und sich die in der Seitenwand (SW) der Gabelzinke (2) angeordnete nutförmige Ausnehmung (20; 20a) von dem Gabelrücken (2d) über den Gabelknick (2c) und entlang des Gabelblatts (2a) zu dem Einbauort erstreckt.

5. Gabelzinke nach Anspruch 2, **dadurch gekennzeichnet, dass** der Einbauort der mindestens einen elektrischen Einrichtung (10) von der Gabelzinkenspitze (2b) gebildet ist und sich die in der Seitenwand (SW) der Gabelzinke (2) angeordnete nutförmige Ausnehmung (20; 20a) von dem Gabelrücken (2d) über den Gabelknick (2c) und entlang des Gabelblatts (2a) zu dem Einbauort erstreckt.

6. Gabelzinke nach einem der Ansprüche 1 bis 5, **dadurch gekennzeichnet, dass** die nutförmige Ausnehmung (20; 20a) in die Seitenwand (SW) der Gabelzinke (2) eingearbeitet ist, insbesondere durch eine Fräsbearbeitung.

7. Gabelzinke nach Anspruch 6, **dadurch gekennzeichnet, dass** die nutförmige Ausnehmung (20; 20a) ausgehend von der Oberseite (2e) des Gabelrückens (2d) in die Seitenwand (SW) der Gabelzinke (2) eingearbeitet ist.

8. Gabelzinke nach einem der Ansprüche 1 bis 5, **dadurch gekennzeichnet, dass** die nutförmige Ausnehmung (20; 20a) in einem Einlegeteil ausgebildet ist, wobei das Einlegeteil in einer in der Seitenwand (SW) der Gabelzinke (2) angeordneten Aussparung befestigt ist.

9. Gabelzinke nach einem der Ansprüche 1 bis 8, **dadurch gekennzeichnet, dass** die nutförmige Ausnehmung (20; 20a) einen kreisförmigen Aufnahmequerschnitt (25) aufweist und die Nutöffnung (21) von einem seitlich angeordneten Öffnungsquerschnitt (26) gebildet ist, wobei die Öffnungsweite (W) des Öffnungsquerschnitts (26) kleiner als der Durchmesser (D) des Aufnahmequerschnitts (25) ist.

10. Gabelzinke nach einem der Ansprüche 1 bis 9, **dadurch gekennzeichnet, dass** die flexible Kabelhalterung (12) als flexibles Kabelschutzrohr (12a) ausgebildet ist.

11. Gabelzinke nach Anspruch 10, **dadurch gekennzeichnet, dass** das flexible Kabelschutzrohr (12) als Wellrohr, insbesondere geschlitztes Wellrohr, oder als Spiralschlauch (13) ausgebildet ist.

12. Gabelzinke nach einem der Ansprüche 1 bis 9, **dadurch gekennzeichnet, dass** die flexible Kabelhalterung (12) als mindestens ein flexibler Kabelhaltering und/oder mindestens ein flexibler Kabelhalteclips ausgebildet ist.

13. Gabelzinke nach einem der Ansprüche 1 bis 12, **dadurch gekennzeichnet, dass** die elektrische Einrichtung (10) als Sensor (30), beispielsweise Abstandssensor, oder als Kamera (31) oder als Lampe (32) oder als Laser oder als Ultraschallsensor (33; 34; 35; 36) ausgebildet ist.

14. Gabelzinke nach einem der Ansprüche 1 bis 13, **dadurch gekennzeichnet, dass** die Gabelzinke (2) an der rechten Seitenwand (SW) oder an der linken Seitenwand (SW) mit einer nutförmigen Ausnehmung (20) versehen ist.

15. Gabelzinke nach einem der Ansprüche 1 bis 13, dass die Gabelzinke (2) an der rechten Seitenwand (SW) und an der linken Seitenwand (SW) mit jeweils einer nutförmigen Ausnehmung (20; 20a) versehen ist.

16. Flurförderzeug (1) mit mindestes einer Gabelzinke (2) nach einem der vorangegangenen Ansprüche.
